# EUROPEAN PATENT APPLICATION

(11) **EP 1 936 768 A1**
(43) Date of publication of application: **25.06.2008**
(21) Application number: 07122805.0
(22) Date of filing: 11.12.2007
(51) Int. Cl.: H02H 3/00

(54) **Circuit breaker with adjustable ARC-flash protection and wireless sensor and method of use**

(30) Priority: 19.12.2006 US 612877
(71) Applicant: General Electric Company, Schenectady, NY 12345 (US)
(72) Inventor: Vincente, Nataniel Barbosa, Prospect, KY 40059 (US); Singh, Arun Kumar, Farrukhabad 209625 (IN); Nsofor, Kenneth U., New Haven, CT 06513 (US); Papadhima, Edli, Louisville, KY 40207 (US); Bishnoi, Bhanwar Lai, Secunderabad 500015 (IN); Tripathi, Dinesh, Secunderabad 500056 (IN); Unni, Sitara Vasudevan, Secunderabad 500016 (IN)
(74) Representative: Illingworth-Law, William Illingworth

(57) **Abstract**

A circuit breaker includes a microprocessor (16) and a wireless sensor (18) in communication with the microprocessor, the wireless sensor being configured to detect the presence of a person within a predetermined area around the circuit breaker such that a level of protection of the circuit breaker is changed by the microprocessor when the presence of the person within the predetermined area is detected by the wireless sensor. Methods of reducing a level of arc-flash protection of a circuit breaker are also within the scope of the disclosed invention.

## Description

### BACKGROUND OF THE INVENTION

### FIELD OF THE INVENTION

The present invention relates in general to circuit breakers and, more particularly, to circuit breaker with a wireless sensor and adjustable arc-flash protection levels.

### DESCRIPTION OF THE RELATED ART

Circuit breakers are generally well known and used in numerous applications normally to interrupt an electric circuit when certain predetermined conditions are met, although they may be used for other purposes. Typically the predetermined conditions are based on a current level drawn by the circuit to which the circuit breaker is attached, which level, depending on the application, may vary from a few amperes to hundreds or even thousands of amperes. A typical circuit breaker might include a set of separable contacts that can be separated when the set of predetermined conditions to open the circuit are reached. As the separable contacts begin to move away from each other, an electrical arc flash oftentimes forms between the separable contacts. As clearly understood by those of ordinary skill, electrical arc flashes are a safety hazardous to those maintaining or testing energized gear because of the elevated temperatures that these arc flashes may reach, which temperatures may range from about 3000 K to 30,000 K, depending on the current level. Thus, at least for safety reasons, the need for circuit breakers with adjustable levels of arc-flash protections has been recognized.

For example, U.S. Patent Application No. 2005/0219775, published on October 6, 2005, discloses a low-voltage circuit breaker with maintenance trip functions that override the normal or specified trip functions of the breaker in order to reduce pickup currents and/or time delays to effect faster trips, thus reducing arc energy produced by faults during maintenance or testing on a live circuit breaker. In the disclosed apparatus, normal trip functions are overridden by the maintenance trip functions through actuation of a maintenance switch hardwired directly onto the trip unit where the same is accessible at the front of the circuit breaker. Nevertheless, although the device disclosed in the '775 patent application provides for the adjustment of fault levels, at least one of its significant setbacks relates to the fact that the maintenance switch is a hard-wired connection to the circuit breaker, requiring operator intervention. In other words, if maintenance and/or test personnel maintaining and/or testing an energized gear forgets to switch to the maintenance trip functions to lower the protection level, no protection is provided, exposing the user to the potential of an arc flash associated with an accidental fault. In addition, since the switch is hard- wired to the circuit breaker, it can only be changed by an operator physically in direct contact with the breaker, which may be located in a location different from where the maintenance or test is being carried out, thus again increasing the likelihood that the level of protection will not be lowered when needed.

It would therefore be desirable in order to increase the protection provided and to eliminate operator intervention to develop a circuit breaker trip unit capable of reducing the arc energy during the presence of an individual in a specified area around the breaker using a remote wireless sensing mechanism. By sensing the presence of the individual within the predetermined area via a wireless sensor, different level of the protection may be adjusted, including, but not limited to, instantaneous pickup current, short delay pickup, short time delay, ground fault delay, and ground fault time delay, to name a few, without operator intervention.

### BRIEF SUMMARY OF THE INVENTION

One or more of the above-summarized needs and others known in the art are addressed by circuit breakers that include a microprocessor and a wireless sensor in communication with the microprocessor, the wireless sensor being configured to detect the presence of a person in a predetermined area around the circuit breaker such that a level of protection of the circuit breaker is changed by the microprocessor when the presence of the person within the predetermined area is detected by the wireless sensor.

Methods of reducing a level of arc-flash protection of a circuit breaker are also within the scope of the disclosed invention, such methods including the steps of detecting the presence of a person within a predetermined area around the circuit breaker with a wireless sensor in communication with a microprocessor of the circuit breaker; and changing a level of protection of the circuit breaker when the presence of the person within the predetermined area is detected by the wireless sensor.

The above brief description sets forth rather features of the present invention in order that the detailed description that follows may be better understood, and in order that the present contributions to the art may be better appreciated. There are, of course, other features of the invention that will be described hereinafter and which will be for the subject matter of the appended claims.

In this respect, before explaining several preferred embodiments of the invention in detail, it is understood that the invention is not limited in its application to the details of the construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

As such, those skilled in the art will appreciate that the conception, upon which disclosure is based, may readily be utilized as a basis for designing other structures, methods, and systems for carrying out the several purposes of the present invention. It is important, therefore, that the claims be regarded as including such equivalent constructions insofar as they do not depart from the spirit and scope of the present invention.

Further, the purpose of the foregoing Abstract is to enable the U.S. Patent and Trademark Office and the public generally, and especially the scientists, engineers and practitioners in the art who are not familiar with patent or legal terms or phraseology, to determine quickly from a cursory inspection the nature and essence of the technical disclosure of the application. Accordingly, the Abstract is neither intended to define the invention or the application, which only is measured by the claims, nor is it intended to be limiting as to the scope of the invention in any way.

### BRIEF DESCRIPTION OF THE DRAWINGS

A more complete appreciation of the invention and many of the attendant advantages thereof will be readily obtained as the same becomes better understood by reference to the following detailed description provided by way of example only when considered in connection with the accompanying drawings, wherein:
FIG. 1 illustrates a schematic of a circuit breaker according to embodiments of the disclosed invention;
FIG. 2 illustrates a schematic of another circuit breaker according to embodiments of the disclosed invention; and
FIG. 3 illustrates a generalized flowchart for a method of operation of a circuit breaker according to embodiments of the disclosed invention.

### DETAILED DESCRIPTION OF THE PREFERRED EMBODIMENTS

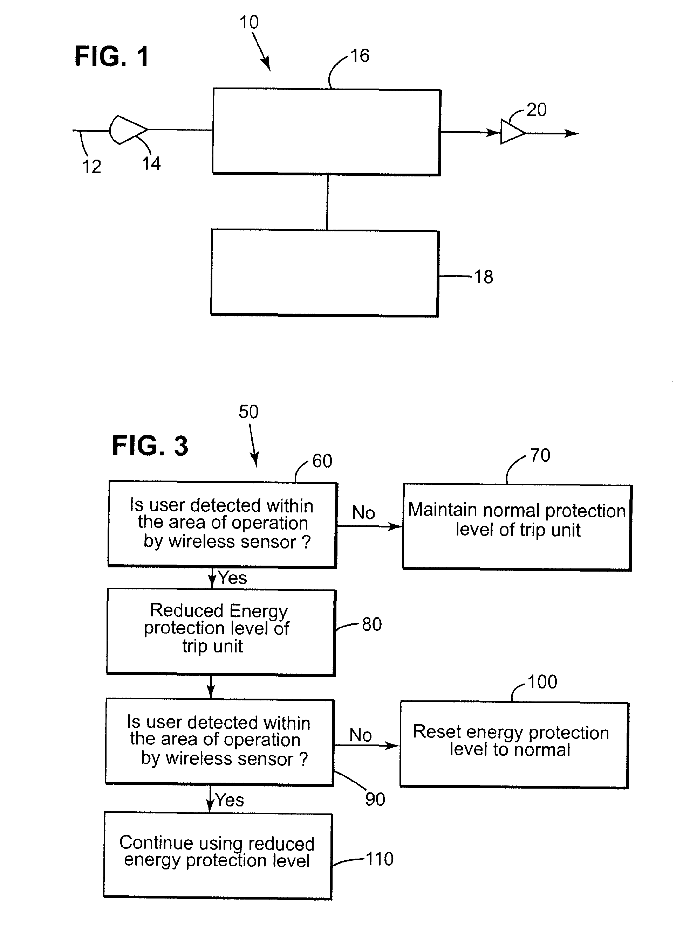

Referring now to the drawings, wherein like reference numerals designate identical or corresponding parts throughout the several views, one of the embodiments of a circuit breaker with adjustable flash protection and a wireless sensor according to disclosed invention will be described. FIG. 1 illustrates a schematic of a circuit breaker 10. As shown, a current signal 12 from a protected circuit (not shown) is fed into a voltage conditioning circuit 14 of the circuit breaker 10 to filter and adjust the gain of the current signal 12. The conditioned signal is then supplied to a microprocessor 16 of the circuit breaker 10. Also connected to the microprocessor 16 is a wireless sensor 18 and a flux shifter circuit 20.

In operation, the circuit breaker 10 is initially programmed to operate with a normal level of protection. If an overload occurs on the circuit to which the circuit breaker 10 is connected, the microprocessor sends a signal to the flux shifter 20 and a trip unit (not shown) of the circuit breaker 10 is tripped. In addition, a range of the wireless sensor 18 characterizes a predetermined zone, such that, whenever the presence of a person is detected within that zone, that detection is communicated to the microprocessor 16 and the level of protection provided by circuit breaker 10 is reduced such that the flux shifter 20 will trip the circuit breaker 10 when the current signal 12 reaches the reduced level set in the microprocessor 16 in view of the fact that a person has been detected in the predetermined zone. Once a person leaves the safety zone, the microprocessor 16 may be programmed to reset the level of protection to normal or to any other desired level.

As such, if maintenance and/or test personnel maintaining and/or testing an energized gear containing the circuit break 10 walks into the predetermined zone, as detected by the wireless sensor 18, the level of arc-flash protection is automatically lowered without the need for that person to reach to the circuit breaker 10 or any other switch hardwired thereto, thus minimizing or eliminating the risk that the user will be exposed to the potential of an arc flash associated with an accidental fault. As such, the circuit breaker 10 according to the disclosed invention increases the level of arc-flash protection while eliminating the need for operator intervention during the presence of an individual in an area around the breaker characterized by the use of the remote wireless sensing mechanism. By sensing the presence of the individual within the unsafe area via a wireless sensor, different level of the protection may be adjusted, including, but not limited to, instantaneous pickup current, short delay pickup, short time delay, ground fault/earth delay, ground/earth fault time delay, longtime pickup, long time delay, protective relay protection (over-voltage, under-voltage, undercurrent, voltage unbalance) pickup and delay to name a few.

As understood by those of ordinary skill in the art, any wireless sensor device or module may be used in the instant invention. For example, but not a limitation, the wireless sensor 18 may be physically connected to the microprocessor 16 of the circuit breaker 10 by radio communication, the internet, and/or a hand-held computing wireless device, to name a few.

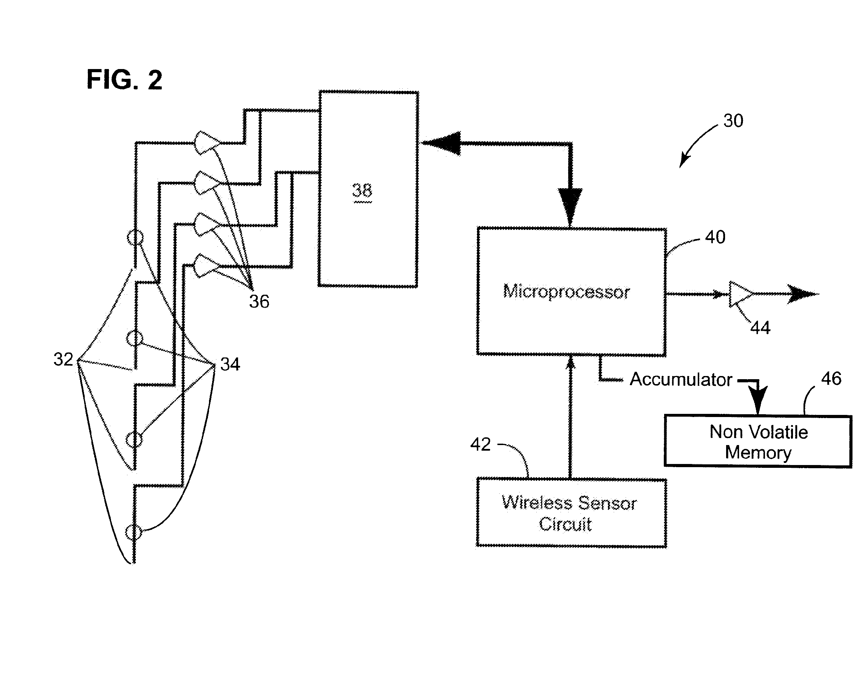

In another embodiment of a circuit breaker 30 according to the disclosed invention, as illustrated in FIG. 2, an electric circuit (not shown) being protected by the circuit breaker 30 is connected thereto at 32 via a plurality of phase current transformers 34 connected to voltage conditioning circuits 36, which provide filtered and gain-adjusted signals to an analog-to-digital, or A/D, converter 38 of the circuit breaker 30. A microprocessor-based trip unit records the current flowing through the circuit breaker 30 or motor overload relay via the current transformers 34, voltage conditioning circuits 36, and A/D converter 38. The current transformers 34 may also be configured to provide the trip unit with power. To implement reduced energy protection mode, a microprocessor 40 is programmed to sense the presence of a user within a pre-established zone by a wireless input from a wireless sensor 42 and then to decide what level of protection to set the circuit breaker 30 to, including, but not being limited to, the use of standard protection set points/delays, predefined protection set points/delays, as well as user-defined protection set points/delays. As understood by those of ordinary skill in the applicable arts, an input of the wireless sensor 42 may be connected to an interrupt of the microprocessor 40 in order to increase the transition time from standard to pre-defined values. Furthermore, the wireless sensing mechanism may be powered by a power source selected from the group including a battery, a current and/or external 24Vdc power supply, a shunt-trip, or ST, module 24Vdc, a under-voltage-release, or UVR, module 24dc, a super capacitor, and combinations thereof. As understood by those of ordinary skill in the applicable arts, in a shunt-trip module, when a voltage (e.g., 12-600Vac/dc) is applied to it, it will send a signal to the trip unit to trip the breaker. It may also send a signal directly to the breaker flux shifter. It may also have status indicator (relay contact) to indicate an input voltage to the ST caused a trip. In an under voltage release module, when a voltage fall below a predefined programmed voltage, the units sends a signal to the trip unit to trip the breaker. It may also send a signal directly to the breaker flux shifter. It may also have status indicator (relay contact) to indicate an input voltage to the UVR caused a trip.

In use, the trip unit (not shown) of the circuit breaker 30, upon detection of motion of a person within a specified range from the wireless sensor 42 (e.g., 200 meters), decreases its instantaneous protection set point, allowing the circuit breaker 30 to trip faster. A front panel LED configured to flash at a pre-determine frequency controlled by the microprocessor 40 may be used to indicate the presence of a person within the room. An LCD, LED, and/or a Relay Output may also be used to indicate to the operator if the trip unit is on the standard protection mode or in a low arc-energy-protection mode. Also the trip unit may include an internal programmable relay that can be configured to implement this feature. If enabled, the contact may be configured to change state when the presence of a person is detected within the room where the wireless sensor 42 is disposed. The contact may be connected to an alarm system and the breaker may be configured to allow the user the ability to turn-off this protection either by a keypad (not shown) and/or a switch (not shown) on the trip unit. When the trip unit senses a presence of an individual within the circuit breaker room (or predetermined unsafe area) via the wireless sensor 42 located strategically within the room, it automatically changes the make current release, or MCR, high instantaneous, or HSET, and/or other protection set points and delays to values predefined by a user. Also, the user has the ability to override this protection either by keypad, communication, and hardwire input, or a combination thereof. Similarly to the embodiment of FIG. 2, different level of the protection may be adjusted, including, but not limited to, instantaneous pickup current, short delay pickup, short time delay, ground fault delay, and ground fault time delay, to name a few. A nonvolatile memory 46 may be used to save trip unit parameters (e.g., protection options (Long Time, Short Time, Instantaneous, Ground Fault etc), breaker information (sensor rating, frame size, neutral location etc), protection set points and delay times, to name a few), which values will be maintained and not changed in case of trip unit power loss.

Methods of reducing arc-flash protection in a circuit breaker that includes a wireless sensor are also within the scope of the embodiments of the invention disclosed. FIG. 3 illustrates a generalized flowchart for a method 50 of operation of a circuit breaker according to embodiments of the disclosed invention. At 60, the wireless sensor first detects the presence of a user within the area of operation of the circuit breaker. If the wireless sensor does not detect an individual within the area of operation, the normal level of protection of the trip unit is maintained at 70. If the wireless sensor does detect an individual within the area of operation, the level of protection of the trip unit is reduced to a pre-programmed level at 80. While the operation of the trip unit is carried out at the reduced level of protection, the present of an individual within the area of operation continues to be monitored by the wireless sensor of the circuit breaker at 90 and the level of reduced protection maintained at the low level at 110. Once an individual is no longer detected within the area of operation, the level of protection of the circuit breaker is reset to normal or to any other level preprogrammed by the user in the microprocessor of the circuit breaker at 100.

With respect to the above description, it should be realized that the optimum dimensional relationships for the parts of the invention, to include variations in size, form function and manner of operation, assembly and use, are deemed readily apparent and obvious to those skilled in the art, and therefore, all relationships equivalent to those illustrated in the drawings and described in the specification are intended to be encompassed only by the scope of appended claims.

In addition, while the present invention has been shown in the drawings and fully described above with particularity and detail in connection with what is presently deemed to be practical and several of the preferred embodiments of the invention, it will be apparent to those of ordinary skill in the art that many modifications thereof may be made without departing from the principles and concepts set forth herein. Hence, the proper scope of the present invention should be determined only by the broadest interpretation of the appended claims so as to encompass all such modifications and equivalents.

## Claims

1. A circuit breaker, comprising:
a microprocessor; and
a wireless sensor in communication with the microprocessor, the wireless sensor being configured to detect the presence of a person in a predetermined area around the circuit breaker, wherein a level of protection of the circuit breaker is changed by the microprocessor when the presence of the person within the predetermined area is detected by the wireless sensor.

2. The circuit breaker of claim 1, wherein:
the level of protection is selected from the group consisting of an instantaneous pickup current, a short delay pickup, a short time delay, a ground fault/earth delay, a ground/earth fault time delay, a longtime pickup, long time delay, a protective relay protection, and combinations thereof;
the level of protection is a user-defined set point or delay; and
the wireless sensor is connected to an interrupt of the microprocessor so as to increase a transition time for the change in level of protection.

3. The circuit breaker of claim 1 or claim 2, further comprising:
an analog-to-digital converter connected to the microprocessor;
a voltage conditioning circuit connected to the analog-to-digital converter;
a phase current transformer connected to the voltage conditioning circuit and configured to power the circuit breaker;
a flux shifter circuit connected to the microprocessor;
a warning light configured to be activated when the wireless sensor detects the presence of the person within the predetermined area;
an LCD, an LED, or a Relay Output configured to indicate the presence of the person within the predetermined area; and
means for disabling the wireless sensor.

4. The circuit breaker of any one of the preceding claims, wherein the wireless sensor is configured to communicate with the microprocessor by means selected from the group consisting of a radio communication, an internet communication, and a communication from a hand-held computing wireless device, and combinations thereof.

5. A method of reducing a level of arc-flash protection of a circuit breaker, the method comprising:
detecting the presence of a person within a predetermined area around the circuit breaker with a wireless sensor in communication with a microprocessor of the circuit breaker; and
changing a level of protection of the circuit breaker when the presence of the person within the predetermined area is detected by the wireless sensor.

6. The method of claim 5, wherein the changing further comprises changing the level of protection from a normal level to a reduced level.

7. The method of claim 6 or claim 7, further comprising:
changing the level of protection from the reduced level to the normal level when the person leaves the predetermined area as detected by the wireless sensor.

8. The method of any one of claims 5 to 7, wherein:
the level of protection is selected from the group consisting of an instantaneous pickup current, a short delay pickup, a short time delay, a ground fault delay, a ground fault time delay, and combinations thereof; and
the level of protection is a user-defined set point or delay.

9. The method of any one of claims 5 to 8, further comprising:
activating a light disposed on the circuit breaker when the wireless sensor detects the presence of the person within the predetermined area;
indicating the presence of the person within the predetermined area on an LCD, an LED, or a Relay Output disposed on the circuit breaker;

10. The method of any one of claims 5 to 9, further comprising:
disabling the wireless sensor after the presence of the person is detected.
